Europäisches Patentamt

European Patent Office

Office européen des brevets

(11) Publication number: **0 307 046**
**A1**

## EUROPEAN PATENT APPLICATION

(21) Application number: 88201907.8

(22) Date of filing: 05.09.88

(51) Int. Cl.⁴: **B65G 67/60** , **B65G 17/12** ,
**B65G 17/42**

(30) Priority: 08.09.87 NL 8702128

(43) Date of publication of application:
**15.03.89 Bulletin 89/11**

(84) Designated Contracting States:
**AT BE CH DE ES FR GB GR IT LI LU NL SE**

(71) Applicant: **B.V. MACHINEFABRIEK FIGEE**
**Hendrik Figeeweg 1**
**NL-2031 BJ Haarlem(NL)**

(72) Inventor: **Spaans, Cornelis**
**Hendrik Marsmanlaan 25**
**NL-2624 TJ Delft(NL)**

(74) Representative: **Baarslag, Aldert D. et al**
**Nederlandsch Octrooibureau Johan de**
**Wittlaan 15 P.O. Box 29720**
**NL-2502 LS Den Haag(NL)**

(54) **Device for unloading bulk material.**

(57) A device for unloading bulk material comprises
an elevator (4) with buckets (19) fixed to an endless
belt (18) and two belt diversion drums (20). At least
one of these drums is connected to a drive motor.
The object is to fix the buckets to the endless belt in
such a way that collision and conveyance forces can
be resisted and the belt still stays flexible enough to
run over the drums without being impeded by the
bucket fastenings. Therefore each of the buckets
(19) is fixed by at least one fixing belt (23) to at least
one segment (22). The fixing belt projects through
an opening in the belt (18) between the bucket and
the segment. The outward-facing surface of the seg-
ments (22) is circular and has a radius essentially
corresponding to the radius of the drums (20). Each
of the drums is provided with at least one groove
(25) in which the segments can be accomodated.
Preferably each bucket (19) is fixed to two adjacent
segments (22) and the drums (20) each have two
grooves to accomodate a continuous row of seg-
ments.

fig - 5

## Device for unloading bulk material.

The invention relates to a device for unloading bulk material, comprising an elevator with buckets fixed to an endless belt and two belt diversion drums, at least one of which is connected to a drive motor.

Such a device can be used for unloading ship's holds loaded with bulk material.

EU-B-055 879 discloses an unloading device with an elevator which is made up of carriers attached to an endless cable. The cable runs over a driving disc and a snatch block. Bushes are used to fasten the carriers to the cable.

The output can be improved by using buckets instead of carriers. A problem here is the fixing of the buckets to the endless belt in such a way that collision and conveyance forces can be resisted and the belt still stays flexible enough to run over the drums without being impeded by the bucket fastenings.

The invention solves this problem, and to this end the device mentioned in the preamble is characterized in that each of the buckets is fixed by at least one fixing bolt to at least one segment, said fixing bolt projecting through an opening in the belt between bucket and segment, and the outward-facing surface of the segments being circular and having a radius essentially corresponding to the radius of the drums, and each of the drums being provided with at least one groove in which the segments can be accommodated.

Each bucket is preferably fixed to two adjacent segments, and the drums preferably have two grooves.

Since the segments are accommodated in the grooves of the drums and the radius of the outward-facing surface of the segments is essentially equal to the radius of the drums, the belt runs unimpeded and flexibly over the drums. The belt is at no point so curved or deformed that damage could occur. The belt is retained between segments and rear wall of the buckets. The strain of the belt on the segments is absorbed by the bolts and passed on to the rear plate of the buckets. These rear plates have great rigidity, so that the force on the segments can be transferred via the rear plates to the casing of the drums.

In order to prevent tilting and other relative movements of the buckets relative to the drum, apart from the fixing bolt a spacer bolt can also be disposed between a bucket and a segment, said spacer bolt extending through the belt without the latter being held at that point.

In order to ensure that the segments are always taken up in the drum grooves when the belt is circulating, even with asymmetrical loading of the buckets, it is greatly preferable for the device to have guide elements for guiding the segments to the grooves in the drums.

The buckets can be of such shape that the lengthwise section thereof decreases towards the bottom, as a result of converging, slanting side walls and a slanting front wall. This shape has the advantage that the buckets can be fixed very close after one another on the belt, and it is easy to fill the buckets through the slat-type openings at the slanting side walls. Besides, the buckets can unload the material centrifugally.

The rear side of the buckets is preferably formed by a sturdy strip, leaving the bottom part of the buckets open. This means that in the ascending part of the belt material is prevented from flowing out by said belt, while in the downgoing part any material which has ended up between belt and buckets can be discharged through the buckets and cannot adhere locally to the belt, which could cause deformations.

In a second embodiment of the buckets the bottom of each bucket is separate from said buckets and is fixed to the rear wall of a preceding bucket. In this embodiment the front of the buckets runs essentially parallel to the rear, so that they have the maximum capacity. Such a shape can have the disadvantage that centrifugal unloading cannot take place, but since the bottom of each bucket is fixed to the rear wall of a preceding bucket, the bottoms in the upgoing and downgoing part of the bucket will close off reasonably well, while they turn out in a bend below the buckets, so that centrifugal unloading is still possible.

In order to take material efficiently to the buckets, filling screws are fitted on the shaft of the bottom drum on either side.

A cap can be placed over the top and bottom drum, the top cap opening into a discharge, while filling apertures are disposed on either side opposite each filling screw in the bottom cap.

The elevator is preferably provided with vertically movable frames, with a luffable and slewable screw conveyor being attached to each of them. Screw conveyors are suitable for breaking up and simultaneously moving bulk material. Since the screw conveyor units are connected to the vertically movable frames so that they both luff and slew, a conical crater can be dug in the bulk material, so that the material is conveyed down and rolls down itself depending on the angle of gradient. This leads to a saving in conveying energy. It is also possible to luff the screw conveyors in such a way that a material cone remains standing with the tip in the axis of symmetry of the elevator. It is important that as a result of the use of two symmetrically placed screw conveyor units external axial forces cancel each other out, at least if the two sets of screws lie flat in the same vertical plane.

Each screw conveyor unit preferably has two adjacent screw conveyors. It has been found that the output of such a double screw is greater than twice the output of a single screw.

The invention will now be explained in greater detail with reference to the figures, in which examples of embodiments are shown.

Fig. 1 shows a view of the unloading device according to the invention.

Fig. 2 shows a front view of the elevator with feed device.

Fig. 3 shows a top view of the provisions according to Fig. 2.

Fig. 4 gives a perspective view of a first embodiment of the belt with buckets.

Fig. 5 shows a cross section of the bottom drum over which the belt with buckets according to Fig. 4 is conveyed.

Fig. 6 shows a side view of the bottom end of the elevator with the buckets according to fig. 4.

Fig. 7 shows a front view of the belt with buckets according to Figs. 4 to 6.

Fig. 8 shows a perspective view of a second embodiment of the belt with buckets.

Fig. 9 shows a cross section of the bottom drum over which the belt with buckets according to Fig. 8 is conveyed.

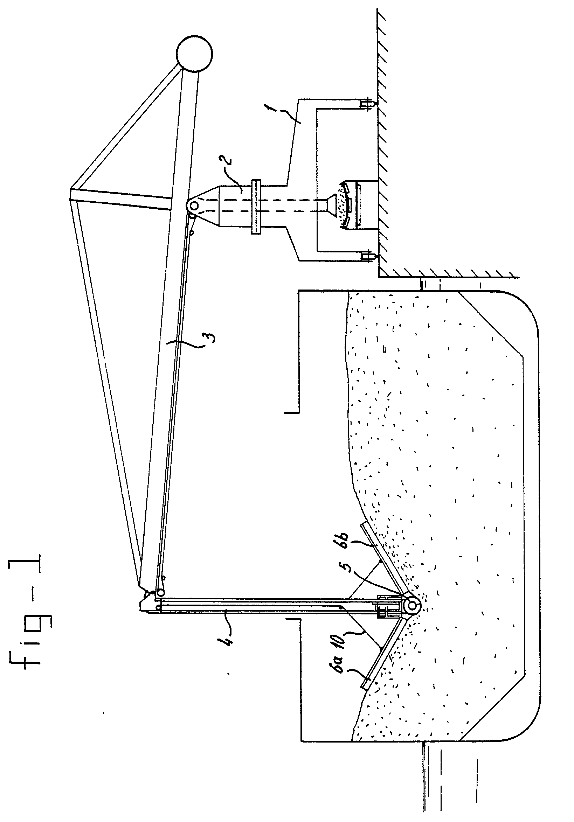

The unloading device shown in Fig. 1 comprises a mobile gantry 1, a superstructure 2 which is disposed so that it rotates relative to said gantry, and which contains an engine room, a jib 3 connected to the superstructure in such a way that is slews and luffs, and an elevator 4 suspended from the end of the jib.

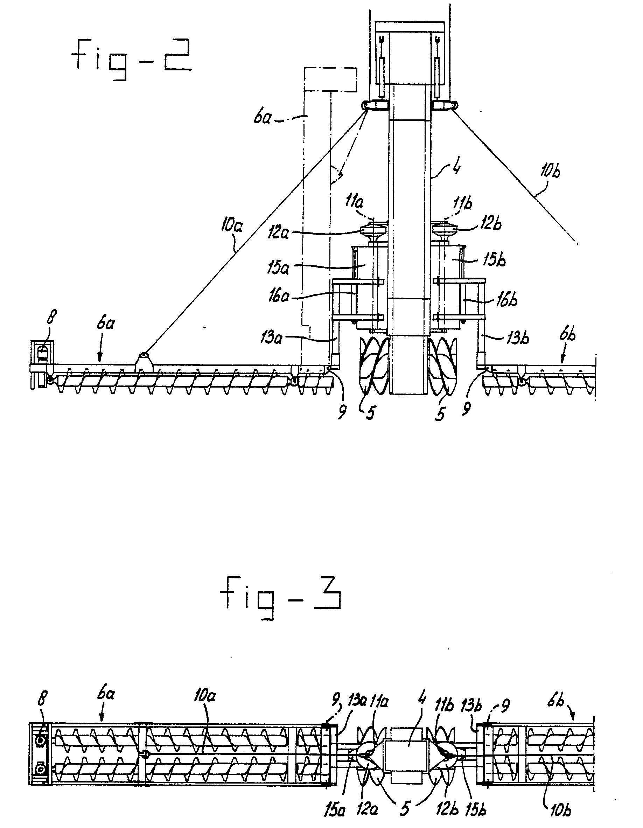

As can be seen from Figs. 2 and 3, two filling screws 5 are provided symmetrically relative to the bottom end of the elevator 4. These screws can push the stream of material symmetrically in the elevator. Two screw conveyor units 6a, 6b are also provided in such a way that they slew, luff and are vertically displaceable relative to the elevator 4. Each unit 6a, 6b comprises one or two screw conveyors (see Fig. 3), one with a lefthand thread, and one with a righthand thread, drive motors 8 being able to drive the screws in such a way that excavated material is carried to the elevator 4. The units 6a and 6b are luffable about the hinge 9, while wires 10a, 10b are used for luffing in and out.

The fully luffed-in position of unit 6a is shown in Fig. 2 by dotted and dashed lines. Each unit 6a, 6b can be swung about the hinge pin 11a, a motor 12a, 12b taking care of the swing movement. The frames 13a, 13b to which the units 6a, 6b are hingedly attached can be moved up and down by means of hydraulic cylinders 16a, 16b, the frames being displaced relative to the rotary bars 15a, 15b. The moment of the motors 12a, 12b is transmitted via the bars 15a, 15b to the frames 13a, 13b.

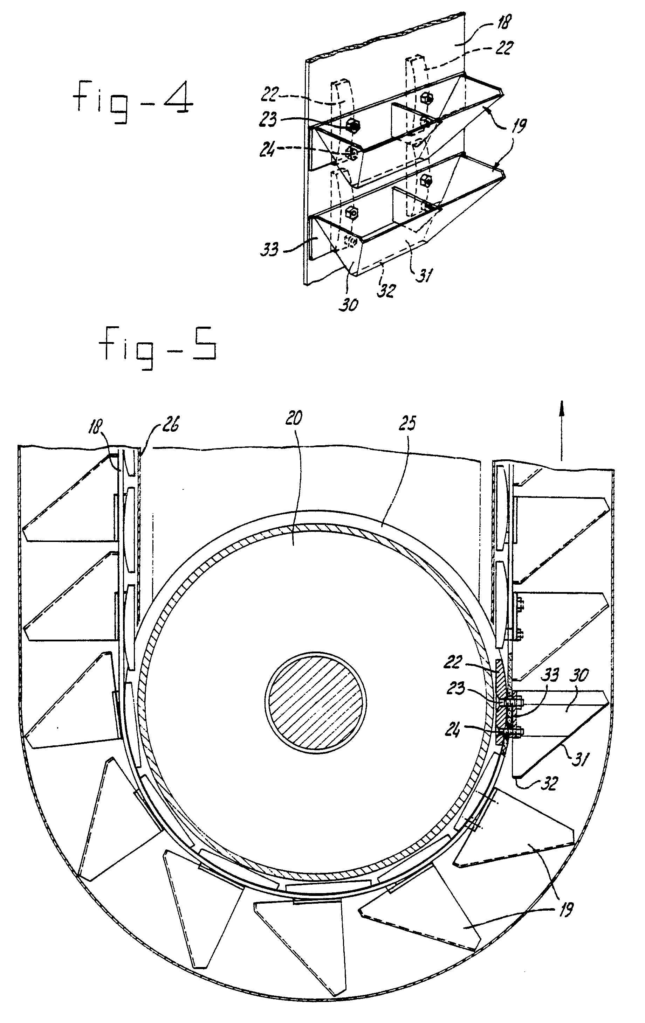

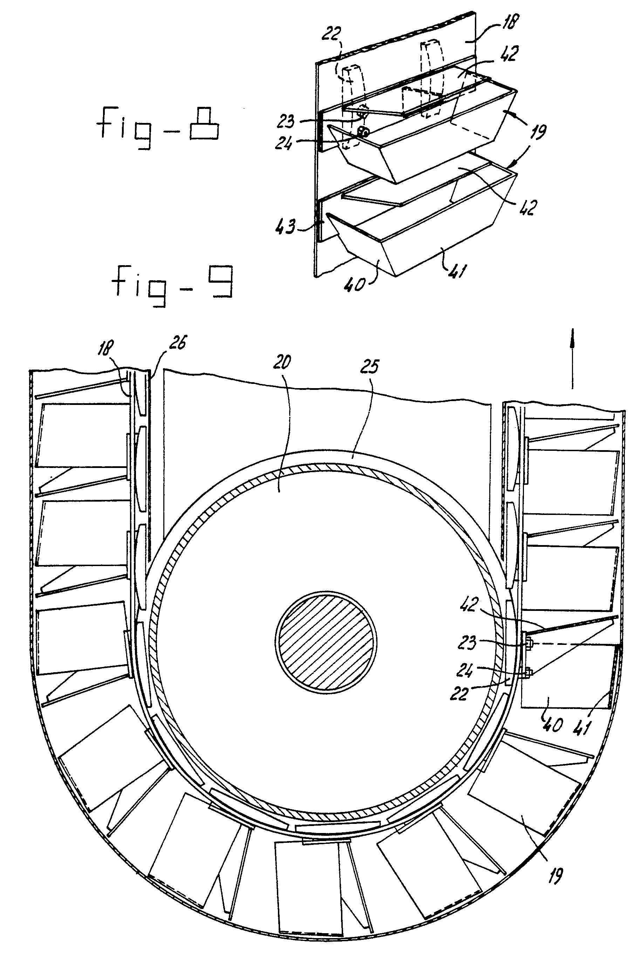

Figs. 4 to 7 show a first embodiment and Figs. 8 and 9 a second embodiment of the elevator 4. Both embodiments comprise an endless belt 18, a series of buckets 19 attached to said belt, and two drums, the bottom drum 20 of which is shown in cross section in Fig. 5. This drum, unlike the top drum (which is not shown) is not driven by a motor. The endless belt is conveyed over the drums.

The connection of each of the buckets 19 to the belt 18 is produced by means of segments 22, which are elongated blocks whose external surface is curved, and in which two bolt holes are cut: one approximately in the centre of each segment, and one below said centre. The belt near each bucket is retained between said segments and the rear side of the bucket by means of bolts 23 provided in the centre hole of two segments. A spacer bolt 24 is provided in the hole below the centre of each segment and, without touching the belt, projects through an elliptical hole in the belt and maintains a certain distance between the segment in question and the rear side of the bucket. The belt 18 can move within said distance.

Both drums have two grooves 25 cut in them which are slightly wider than the width of the segments. Viewed in the direction of movement of the belt 18, the buckets follow each other with a small space between them. The segments 22 are accommodated in the grooves 25 when the drums are conveyed over the belt 18. The segments which are accommodated in the grooves lie with approximately the same surface pressure against the belt as the drum in question. The segments can absorb relatively great moments and transmit them via the bolts 23 and 24 to the buckets. The segments can follow the curve of the drums without any hindrance. There are no great deformations of the belt. The pressure of the belt on the segments 22 is absorbed by the bolt connection 23 and passed on to the rear plate (33 in Fig. 4 and 43 in Fig. 8) of the bucket 19. Said rear plate is so rigid that the force on the segment in question is transmitted via said plate to the drum casing on either side of the grooves in the drums. The connection of the bucket 19 to the belt 18 is such that when the bucket is resting against a drum the bucket cannot make any relative movement in relation to the drum, the fastening can absorb great forces, and the belt rests unimpeded on the drum and can extend unimpeded in the upgoing and downgoing part. The segments are mounted in a continuous double row.

Guiding the row of segments by wheels or rails 26 just before the belt runs onto a drum prevents the belt from becoming derailed in the event of asymmetrical loading or another asymmetry.

In the first embodiment the buckets have two slanting side walls 30 and a slanting front wall 31. These walls converge towards a very narrow bottom 32. The rear wall of each bucket, which is the wall on which the bolts 23 and 24 are fixed, consists of a sturdy, relatively narrow strip 33 which does not run through to the bottom part of the buckets. In other words, this bottom part is open. If material should fall into the downgoing part between belt and bucket, this material can be discharged through the bucket, so that there can be no adhesion of the material to the belt, which could lead to deformations.

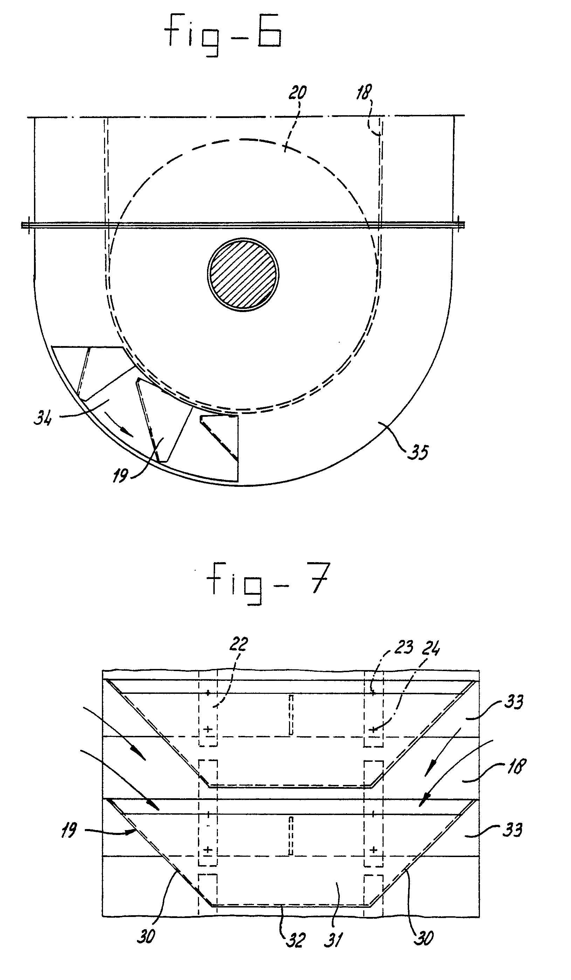

Due to the slanting position of the side walls 24, the buckets can be placed very close together, without the filling apertures not being large enough. The front view of Fig. 7 shows by means of arrows how the material goes laterally into the buckets.

The bottom end of the elevator 4 is accommodated in a box 35. Provision is made in the bottom part of the side walls for a cutout 34, through which bulk material is conveyed by the screws 5. The slanting front wall 31 of the buckets permits centrifugal unloading at the top drum. The elevator is self-filling at the lowest point thereof.

In the second embodiment according to Figs. 8 and 9 the buckets 40 have an only slightly sloping or vertical front wall 41 and slightly slanting side walls. The rear wall in this embodiment also is made up of a sturdy strip which does not cover the lowest bucket parts. The bottom 42 of each bucket is fixed to the rear wall 43 of the next bucket. In the upgoing and downgoing part the bottom shuts off the bucket reasonably well and when taking a bend the bottom turns out under the bucket, so that centrifugal unloading becomes possible.

Through the manner of fitting buckets to the belt, great forces and moments can be absorbed in bends, even more than in the vertical part. With bulk material which is free-flowing, the material will be able to flow through at the front bottom side and be carried along. With cohesive, non-free-flowing bulk material the infeed will take place mainly at the sides through the filling screws 6a, 6b. The volume flow can be raised at a speed which is greater than usual and can be unloaded centrifugally onto a conveyor belt which is mounted on a jib 3. This belt travels at approximately the same speed as the elevator. The jib 3 containing the belt can slew and luff simultaneously. Any point of the ship's hold is accessible within the limits of the device described. The position of the elevator relative to the hatch head can be selected freely by a combination of slewing of the jib 3 and moving of the gantry 1. The depth is adjustable through the luffing movement. The space under the hatch heads is accessible through the double set of slewing and luffing screw conveyor units 6a, 6b.

Of course, many modifications of the constructions shown are possible within the scope of the invention.

**Claims**

1. Device for unloading bulk material, comprising an elevator (4) with buckets (19) fixed to an endless belt (18) and two belt diversion drums (20), at least one which is connected to a drive motor, characterized in that each of the buckets (19) is fixed by at least one fixing bolt (23) to at least one segment (22), said fixing bolt projecting through an opening in the belt (18) between bucket and segment, and the outward-facing surface of the segments (22) being circular and having a radius essentially corresponding to the radius of the drums (20), and each of the drums being provided with at least one groove (25) in which the segments can be accommodated.

2. Device according to Claim 1, characterized in that each bucket (19) is fixed to two adjacent segments (22), and the drums (20) each have two grooves to accommodate a continuous row of segments.

3. Device according to Claim 1 or 2, characterized in that the fixing bolts are disposed approximately in the centre of the length of the segments (22), and below each fixing bolt a spacer bolt (24) is fitted between a bucket (19) and a segment (22), said spacer bolt projecting through the belt (18) without the latter being held at that point.

4. Device according to one of the preceding claims, characterized by guide elements (26) for guiding the segments to the grooves (25) in the drums.

5. Device according to one of the preceding claims, characterized in that, as a result of the slanting side walls (30) converging towards the bottom and a slanting front wall (31), the lengthwise section of the bucket (19) decreases towards the bottom.

6. Device according to Claim 5, characterized in that the rear side of the bucket (19) is formed by a sturdy strip (33; 43) which leaves the bottom part of the buckets open.

7. Device according to one of Claims 1 to 4, characterized in that the bottom (42) of each bucket is detached from said bucket and is fixed to the rear wall (43) of a next bucket.

8. Device according to one of the preceding claims, characterized in that filling screws (5) are fitted on either side on the shaft of the bottom drum (20).

9. Device according to Claim 8, characterized in that a cap (35) is placed over the top and the bottom drum, the top cap opening out into a discharge, and filling apertures (34) being provided on either side in the bottom cap, one opposite each filling screw (5).

10. Device according to one of the preceding claims, characterized in that the elevator (4) is provided with vertically displaceable frames (13a, 13b), to each of which a luffing a slewing screw conveyor unit (6a, 6b) is connected.

11. Device according to Claim 10, characterized in that each screw conveyor unit (6a, 6b) has one or more adjacent screw conveyors.

fig-1

EP 0 307 046 A1

fig-2

fig-3

EP 0 307 046 A1

fig-4

fig-5

Fig-6

Fig-7

Fig-8

Fig-9

European Patent Office

**EUROPEAN SEARCH REPORT**

Application Number

EP 88 20 1907

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-C- 173 388 (C.T. SPEYERER & CO.) <br> * Whole document * <br> --- | 1,2,3 | B 65 G 67/60 <br> B 65 G 17/12 <br> B 65 G 17/42 |
| A | EP-A-0 186 772 <br> (KLÖCKNER-HUMBOLDT-DEUTZ) <br> * Page 9, lines 12-19; figures 6-9 * <br> --- | 1,5 | |
| A | FR-A- 567 438 (STHEGENS) <br> * Whole document * <br> --- | 1 | |
| D,A | EP-A-0 055 879 (SPAANS) <br> * Figures 1,2 * <br> --- | 1,8,9 | |
| A | DE-C- 110 384 (CORRELL) <br> * Whole document * <br> --- | 1,10 | |
| A | US-A-4 333 561 (SCHLEGEL) <br> * Figures * <br> ----- | 7 | |

TECHNICAL FIELDS SEARCHED (Int. Cl.4)

B 65 G

The present search report has been drawn up for all claims

| Place of search | Date of completion of the search | Examiner |
|---|---|---|
| THE HAGUE | 02-12-1988 | OSTYN T.J.M. |